# EUROPEAN PATENT APPLICATION

(11) **EP 4 144 804 A1**
(43) Date of publication of application: **08.03.2023**
(21) Application number: 22192147.1
(22) Date of filing: 25.08.2022
(51) Int. Cl.: C09D 5/00, C09D 7/61, C09D 7/63, G01N 21/64

(54) **MULTIFUNCTIONAL BARRIER COATING FORMING SOLUTIONS AND METHODS FOR APPLYING AND DETECTING THE SAME**

(30) Priority: 02.09.2021 US 202117465129
(71) Applicant: B/E Aerospace, Inc., Winston-Salem, NC 27105 (US)
(72) Inventor: MARTZ, Thomas, Winston-Salem, NC, 27106 (US); POTEET, Steven, 01721, Ashland (US); PIMENTEL, Katherine Urena, Manchester, 06042 (US); REXWINKLE, Irene, Mill Creek, 98012 (US); McCONNELL, David C., Annalong, Down (GB)
(74) Representative: Dehns

(57) **Abstract**

Disclosed are multifunctional barrier coating forming solutions for surface coating substrates, for instance interior surfaces in aircraft. In embodiments, the solutions include a base coating component in an amount from 5 to 40% by weight of the solution, a solvent in an amount from 50 to 70% by weight of the solution, an FST resistive component in an amount from 0.1 to 5% by weight of the solution, a UV resistive component in an amount from 0.1 to 2% by weight of the solution, an antimicrobial component in an amount from 0.1 to 5% by weight of the solution, and optionally a dye component in an amount less than 0.5% by weight of the solution. Also disclosed are methods for surface coating a substrate with a multifunctional barrier coating forming solution and detecting the same post application to determine a need for barrier coating reapplication.

## Description

### TECHNICAL FIELD

The present disclosure relates generally to barrier coatings, and more particularly, to multifunctional barrier coating compositions, low-cost methods for applying barrier coatings in the field, and methods for detecting and measuring applied barrier coatings. In some embodiments, the multifunctional barrier coatings disclosed herein can be used to protect aircraft interior surfaces against damage from physical contact, chemicals, and UV exposure, with improved antimicrobial and fire, smoke, and toxicity (FST) performance.

### BACKGROUND

Safety regulations in the U.S. are determined by the Department of Transportation (DoT). For example, the Federal Aviation Administration (FAA) regulates the safety of aircraft, while the Federal Railroad Administration (FRA) regulates the safety of passenger trains, buses and other land-based people movers. Safety regulations, such as fire safety requirements, determine the types of materials suitable for use in these types of passenger vehicles.

Regarding aircraft interior materials, to which the present disclosure finds particular application, standards developed by the American Society for Testing and Materials (ASTM) include standard test methods for surface flammability of materials and specific optical density of smoke generated by solid materials. These standards are commonly referred to as flame, smoke and toxicity (FST) requirements, and materials that perform to ASTM FST flame and smoke standards are considered to have flame spread and smoke concentration rates slow enough to permit passengers sufficient time to disembark.

Additives and coatings can be applied to interior surfaces to improve FST performance. For example, flame retardant coatings can be applied to material surfaces to form a barrier between the material surface and the surrounding environment to counteract fire generation and propagation. In addition to improving FST performance, surface coatings are commonly applied to material surfaces to improve cleanability and durability. For example, hydrophobic surface coatings derived from polymers can be applied to improve fluid resistance. In addition to FST performance and cleanability, surface coatings with antimicrobial properties have been developed to mitigate the potential spread of infectious agents. For example, suspensions including antimicrobial agents are commonly used as disinfectants in surface coatings due to their ability to neutralize microbes.

In response to the coronavirus pandemic, airlines and original equipment manufacturers (OEMs) have focused on improving interior hygiene, such as the unprecedented use of disinfectants and/or UV sanitation, both of which can damage interior surfaces. While various types of surface coatings are commercially available, there is no singular composition that provides the desired hydrophobicity and resistance to physical contact, chemicals, fluids, UV, etc. As such, prior art surface coating applications require multiple layers each having a dedicated function, which is time consuming and costly to apply, and which is difficult to achieve the desired effect because of the layering.

In addition to the difficulties discussed above, conventional barrier coatings also suffer from application and detection issues. For example, conventional barrier coatings are typically sprayed in a booth or in the field. In the case of booth spraying, this adds an additional step to the manufacturing process and is difficult to repair in the field. In the case of field spraying, this technique offers very little control over the application and how much solution is applied to a given area. As for detection, it is necessary to confirm the presence of an adequate and intact barrier coating, which can be difficult for clear, thin coatings, particularly when assessing coatings in the field. For antimicrobial coatings, it is necessary to determine the efficacy of the coating so that the coating can be reapplied as necessary.

Accordingly, in view of the shortcomings of conventional surface coatings as discussed above, what is a needed is a barrier coating composition that imparts multiple functionalities, as well as methods for applying and detecting the same in the field to confirm coverage and determine the need for reapplication as necessary.

### BRIEF SUMMARY

To achieve the foregoing and other advantages, in a first aspect the present disclosure provides a barrier coating forming solution for being applied to form a barrier coating on a surface of a substrate, for instance an aircraft interior component. In embodiments, the barrier coating forming solution includes a base coating component in an amount from 5 to 40% by weight of the solution, a solvent in an amount from 50 to 70% by weight of the solution, a flame, smoke and toxicity (FST) resistive component in an amount from 0.1 to 5% by weight of the solution, an ultraviolet (UV) resistive component in an amount from 0.1 to 2% by weight of the solution, an antimicrobial component in an amount from 0.1 to 5% by weight of the solution, and optionally a dye component in an amount less than 0.5% by weight of the solution.

In some embodiments, the base coating component includes at least one of a siloxane, a silazane, a fluoro-substituted siloxane or silazane, polymethylsisequioxane, and polydimethylsiloxane.

In some embodiments, the solvent includes at least one of an alcohol, water, and an acetate.

In some embodiments, he FST resistive component includes at least one of clays such as montmorillonite having a particle diameter size from 1 to 25 microns, graphene having a particle diameter size from 1 to 25 microns, graphite, single walled or multi-walled carbon nanotubes, aluminum trihydrate, an organophosphate, magnesium hydroxide, an antimony oxide, a molybdenum compound, a boron compound, a halogenated compound, melamine, and zinc.

In some embodiments, the UV resistive component includes at least one of titanium dioxide, zinc oxide, a UV stabilizer, a hindered amine light stabilizer (HALS), and graphene having a particle diameter size from 1 to 25 microns.

In some embodiments, the antimicrobial component includes at least one of copper, silver, silver oxide, graphene, a quaternary ammonium compound, a silane quaternary ammonium compound, and triclosan.

In some embodiments, the optional dye component includes a fluorescent indicator capable of absorption in the UV spectrum and emission in the visible spectrum.

In some embodiments, the optional dye component includes at least one of 5-[[4-[bis(2-hydroxyethyl)amino]-6-(4-sulfonatoanilino)-1,3,5-triazin-2-yl]amino]-2-[(E)-2-[4-[[4-[bis(2-hydroxyethyl)amino]-6-(4-sulfonatoanilino)-1,3,5-triazin-2-yl]amino]-2-sulfonatophenyl]ethenyl]benzenesulfonate, tetrasodium 4,4'-bis[[4-[bis(2-hydroxyethyl)amino]-6-(4-sulphonatoanilino)-1,3,5-triazin-2-yl]amino]stilbene-2,2'-disulphonate], disodium;5-[[4-anilino-6-[2-hydroxyethyl(methyl)amino]-1,3,5-triazin-2-yl]amino]-2-[2-[4-[[4-anilino-6-[2-hydroxyethyl(methyl)amino]-1,3,5-triazin-2-yl]amino]-2-sulfonatophenyl]ethenyl]benzenesulfonate, disodium 4,4'-bis(4-anilino-6-morpholino-s-triazin-2-ylamino)-2,2'-stilbenedisulfonate, disodium;5-[[4-(2-methylanilino)-6-morpholin-4-yl-1,3,5-triazin-2-yl]amino]-2-[2-[4-[[4-(2-methylanilino)-6-morpholin-4-yl-1,3,5-triazin-2-yl]amino]-2-sulfonatophenyl]ethenyl]benzenesulfonate, hexasodium;2-[[4-[(3-amino-3-oxopropyl)-(2-hydroxyethyl)amino]-6-[4-[2-[4-[[4-[(3-amino-3-oxopropyl)-(2-hydroxyethyl)amino]-6-(2,5-disulfonatoanilino)-1,3,5-triazin-2-yl]amino]-2-sulfonatophenyl]ethenyl]-3-sulfonatoanilino]-1,3,5-triazin-2-yl]amino]benzene-1,4-disulfonate, fluorescein-SA, Lucifer yellow, sulforhodamine-B or sulforhodamine-101, pyranine, triazine-stilbene, coumarins, imidazolines, diazoles, triazoles, benzoxazoles, and biphenyl stilbenes.

In some embodiments, the barrier coating forming solution includes the base coating component in an amount from 25 to 35 % by weight of the solution, the FST resistive component in an amount from 0.5 to 3.5% by weight of the solution, and the antimicrobial component in an amount from 0.5 to 2% by weight of the solution.

In another aspect, the present disclosure provides a method for applying a barrier coating to a surface of a substrate and detecting the applied barrier coating. The method includes the steps of providing a barrier coating forming solution including a base coating component, a solvent, an FST resistive component, a UV resistive component, and an antimicrobial component. The method further includes the steps of providing a substrate, applying the barrier coating forming solution to a surface of the substrate, allowing the applied barrier coating forming solution to cure or dry to form a barrier coating on the surface of the substrate, and detecting the formed barrier coating via a quantifiable measurement technique.

In some embodiments, the quantifiable measurement technique according to the method include applying a droplet atop the surface of the substrate and determining a contact angle between the applied droplet and the surface of the substrate.

In some embodiments, the method further includes the sequentially performed steps of applying a first droplet atop the surface of the substrate at a time of formation of the formed barrier coating and determining a first contact angle between the applied first droplet and the surface of the substrate, applying a second droplet atop the surface of the substrate after a predetermined period of use of the substrate to determine a second contact angle between the applied second droplet and the surface of the substrate, and upon exceeding a predetermined difference between the second contact angle and the first contact angle, reapplying the barrier coating forming solution to the surface of the substrate and allowing the reapplied barrier coating forming solution to cure or dry to form a barrier coating on the surface of the substrate.

In some embodiments, the barrier coating forming solution further includes a dye component in an amount less than 0.5% by weight of the barrier coating forming solution, and the quantifiable measurement technique according to the method further includes applying UV light to the surface of the substrate and measuring fluorescence at the surface of the substrate.

In some embodiments, the method further includes the sequentially performed steps of applying UV light to the surface of the substrate at a time of formation of the formed barrier coating and determining a first observed fluorescence at the surface of the substrate, applying UV light to the surface of the substrate after a predetermined period of use of the substrate to determine a second observed fluorescence at the surface of the substrate, and upon exceeding a predetermined difference between the second observed fluorescence and the first observed fluorescence, reapplying the barrier coating forming solution to the surface of the substrate and allowing the reapplied barrier coating forming solution to cure or dry to form a barrier coating on the surface of the substrate.

In some embodiments, the barrier coating forming solution is provided as a wet wipe containing the barrier coating forming solution and the step of applying the barrier coating forming solution to the surface of the substrate comprises wiping the wet wipe along the surface of the substrate to transfer the barrier coating forming solution from the wet wipe to the surface of the substrate.

Embodiments of the present disclosure can include or more or any combination of the above features and elements.

This brief summary is provided solely as an introduction to subject matter that is fully described in the detailed description. This brief summary should not be considered to describe essential features nor be used to determine the scope of the claims. Moreover, it is to be understood that both the foregoing summary and the following detailed description are exemplary and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a schematic diagram illustrating the make-up of a multifunctional barrier coating composition for forming a barrier coating on a surface of a substrate, in accordance with one or more embodiments of the present disclosure;
FIG. 2 is a flow diagram of a method for forming a barrier coating on a surface of a substrate and detecting the presence thereof using a quantifiable measurement technique that considers contact angle, in accordance with one or more embodiments of the present disclosure;
FIGS. 3A and 3B illustrate schematically the implementation of a disclosed contact angle measurement methodology to determine the integrity of an applied barrier coating;
FIG. 4 illustrates schematically the implementation of a disclosed fluorescence measurement methodology to determine the integrity of an applied barrier coating;
FIG. 5 is a flow diagram illustrating a barrier coating quantification method, in accordance with one or more embodiments of the present disclosure; and
FIG. 6 is a collection of photographs of surface luminescence at various wear cycles, in accordance with one or more embodiments of the present disclosure..

### DETAILED DESCRIPTION

Before explaining one or more embodiments of the disclosure in detail, it is to be understood that the embodiments are not limited in their application to the details of construction and the arrangement of the components or steps or methodologies set forth in the following description. In the following detailed description of embodiments, numerous specific details may be set forth to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, the present disclosure provides multifunctional barrier coating forming solutions, methods for applying barrier coating solutions to substrates, and methods for detecting formed barrier coatings to determine the integrity thereof, for instance on interior surfaces of passenger vehicles such as aircraft, to protect the coated surfaces against damage caused by exposure to use, wear, cleaning agents, disinfectants, chemicals, fluids and UV, among others, while also imparting antimicrobial resistance and improved FST performance.

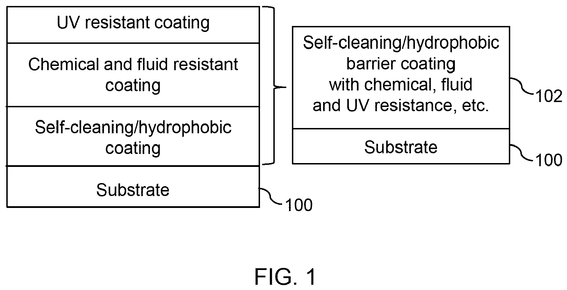

With reference to FIG. 1, a substrate 100 according to the present disclosure may be any substrate type, for instance a high-contact substrate located in a passenger or crew area of a passenger vehicle such as an aircraft, bus, train, ship, etc. Examples of substrate materials include, but are not limited to, synthetic or natural fabric surfaces, plastics, metals, composites and composite finishes, wood, glass, leather, and other substrates. Substrate environments may include, but are not limited to, passenger cabins, crew quarters, lavatories, galleys and cockpits. Other environments may include schools, hospitals, public buildings, etc. In the case of passenger vehicles, the substrate may be an element of a passenger seat, a passenger suite, an interior panel, an overhead bin, a door, a wall, a passenger amenity, a control panel, a passenger service unit, a lavatory fixture, galley equipment, and beverage carts, among others. In some embodiments, the substrate may be an element of a mechanism operable for manipulating another element, for example, a handle, lock, latch, switch, control panel or other high-contact surface.

In embodiments, the present disclosure provides multifunctional barrier coating solutions 102 for forming barrier coatings on substrate surfaces, wherein the functionality of the formed barrier coatings includes, but is not limited to, self-cleaning, hydrophobicity, fluid resistance, chemical resistance, UV resistance, resistance to wear from physical contact, improved FST performance, and antimicrobial properties.

In some embodiments, the barrier coating solution includes a base coating component in an amount from 5 to 40% by weight of the barrier coating forming solution, and more preferably from 25 to 35% by weight of the barrier coating forming solution. Examples of base coating components include, but are not limited to, siloxanes, silazanes, fluoro-substituted siloxanes or silazanes, polymethylsisequioxane, and polydimethylsiloxane, individually or in combinations thereof. In some embodiments, the base coating component may include a binder system including hydrophobic polymer(s) to form a curable surface coating, for instance a polysiloxane-based surface coating.

In some embodiments, the base coating component may include a binder system such as a curable resin having functional groups contained in the resin as a curing agent, for instance epoxy polymers, polyurethanes, alkyds, melamine polymers, phenolic polymers, polyethylenes, polypropylenes, polystyrenes, saturated polyesters, polyamides, polyvinyl compounds, polyisoprenes, polybutadienes, polystyrene-butadienes, individually or in combinations thereof. In some embodiments, the base coating component may be a polysiloxane-based aqueous coating composition for roomtemperature curing, gloss retention and durability in interior applications. Other composite and ultra-violet (UV) resins are envisioned, for instance, resins that improve the compatibility other resins.

In some embodiments, the base coating component includes a hydrophobic polymer to impart increased water repellency and durability of water repellant, as well as resistance to the effects of UV radiation, abrasion and chemical disinfectants. Suitable examples of hydrophobic polymers include, but are not limited to, silicon-based polymers such as polysiloxanes, siloxanes and organofunctional silanes, as well as fluoropolymers, individually or in combinations thereof.

The barrier coating forming solutions according to the present disclosure further include a solvent in an amount from 50 to 70% by weight of the barrier coating forming solution. Examples of solvents include, but are not limited to, tetrahydrofuran preferable for providing uniform coating thickness and rapid drying, as well as good working viscosity, alcohols such as isopropanol and ethanol, water, and acetates such as methyl acetate and tert-butyl acetate, individually or in combination. In some embodiments, aqueous solvents may be preferable to organic solvents for environmental and substrate compatibility reasons.

The barrier coating forming solutions according to the present disclosure further include an FST resistive/performance enhancing component in an amount from 0.1 to 5% by weight of the barrier coating forming solution, more preferably from 0.5 to 3.5% by weight of the barrier coating forming solution. Examples of FST components include, but are not limited to, micro- or nano-sized clays such as montmorillonite and bentonite which can be functionalized with organosilanes to promote dispersion in the solution, preferably 2D nano-sized (i.e., in the z-direction, meaning stacks that are mono to a few layers), with particle size diameters from 0.1 to 25 microns. Other examples of FST components include graphene, carbon nanotubes, graphite, aluminum trihydrate, organophosphates (e.g., ammonium polyphosphate) such as phosphate esters, phosphonates, and phosphinate such as triphenylphosphate and derivatives thereof, chlorophosphates, diphosphates, phosphine oxides, red phosphorus and trialkylphosphates, magnesium hydroxide, antimony oxides, molybdenum compounds (e.g., molybdic oxide, ammonium octamolybdate and zinc molybdate), boron compounds such as barium metaborate and ammonium fluoroborate, decabromo diphenyl ethane, HBCD, tris-tribromophenoxy triazine, melamine and derivatives thereof, melamine cyanurate, zinc stannate, and zinc borate, individually or in combinations thereof.

The barrier coating forming solution further includes a UV resistant component in an amount from 0.1 to 2% by weight of the barrier coating forming solution. Examples of UV resistant components include, but are not limited to, titanium dioxide preferable micro- or nano-sized, zinc oxide preferably micro- or nano-sized, UV stabilizers such as triazoles, for instance hydroxyphenyl-benzotriazole or derivatives thereof, hindered amine light stabilizers (HALS) such as derivatives of 2, 2, 6, 6-tetramethyl piperidine, and graphene preferably particle diameter sized from 0.1 to 25 microns in mono to layer stacks, individually or in combinations thereof.

The barrier coating forming solution further includes an antimicrobial component in an amount from 0.1 to 5% by weight of the barrier coating forming solution, more preferably from 0.5 to 2% by weight of the barrier coating forming solution. Examples of antimicrobial components may include, but are not limited to, copper, zinc pyrothione, silver, silver oxide preferably nano-sized, graphene preferably in a particle size from 0.1 to 25 microns, quaternary ammonium compounds such as benzethonium chloride, methylbenzethonium chloride, benzalkonium chloride and cetyltrimethylammonium chloride, silane quaternary ammonium compounds such as 3-(trihydroxysilyl) propyldimethyloctadecyl ammonium chloride, and triclosan, individually or in combinations thereof.

Optionally, when desiring coating detectability functionality via fluorescence, the barrier coating forming solution may include a dye component in an amount less than 0.5% by weight of the barrier coating forming solution. Examples of dyes may include, but are not limited to, fluorescent indicators such as any fluorescent compound capable of absorption in the UV spectrum and emission in the visible spectrum. For example, the fluorescent compound may absorb radiation in the 100-415 nm wavelength range, more preferably in the 300-415 nm wavelength range, and most preferably in the 365-415 nm wavelength range, and emit radiation in the 100-1000 nm wavelength range, and more preferably emit visible light in the 380-740 nm wavelength range. Suitable fluorescent compounds may be transparent in the presence of visible light and uncolored so as not to alter the color and/or transparency of the coating. Suitable fluorescent compounds can include, but are not limited to, commercially available fluorescent dyes, pigments, colorants and brighteners. A specific, non-limiting example of a suitable fluorescent compound can include 5-[[4-[bis(2-hydroxyethyl)amino]-6-(4-sulfonatoanilino)-1,3,5-triazin-2-yl]amino]-2-[(E)-2-[4-[[4-[bis(2-hydroxyethyl)amino]-6-(4-sulfonatoanilino)-1,3,5-triazin-2-yl]amino]-2-sulfonatophenyl]ethenyl]benzenesulfonate.

In some embodiments, the fluorophoric dye compounds may be anionic dye compounds of λex < 500 nm and λem > 400 nm may be ideally invisible under normal visible light and fluoresce under UV light (e.g., tetrasodium 4,4'-bis[[4-[bis(2-hydroxyethyl)amino]-6-(4-sulphonatoanilino)-1,3,5-triazin-2-yl]amino]stilbene-2,2'-disulphonate], disodium;5-[[4-anilino-6-[2-hydroxyethyl(methyl)amino]-1,3,5-triazin-2-yl]amino]-2-[2-[4-[[4-anilino-6-[2-hydroxyethyl(methyl)amino]-1,3,5-triazin-2-yl]amino]-2-sulfonatophenyl]ethenyl]benzenesulfonate, disodium 4,4'-bis(4-anilino-6-morpholino-s-triazin-2-ylamino)-2,2'-stilbenedisulfonate, disodium;5-[[4-(2-methylanilino)-6-morpholin-4-yl-1,3,5-triazin-2-yl]amino]-2-[2-[4-[[4-(2-methylanilino)-6-morpholin-4-yl-1,3,5-triazin-2-yl]amino]-2-sulfonatophenyl]ethenyl]benzenesulfonate, hexasodium;2-[[4-[(3-amino-3-oxopropyl)-(2-hydroxyethyl)amino]-6-[4-[2-[4-[[4-[(3-amino-3-oxopropyl)-(2-hydroxyethyl)amino]-6-(2,5-disulfonatoanilino)-1,3,5-triazin-2-yl]amino]-2-sulfonatophenyl]ethenyl]-3-sulfonatoanilino]-1,3,5-triazin-2-yl]amino]benzene-1,4-disulfonate, and related, as well as fluorescein-SA, Lucifer yellow, sulforhodamine-B or sulforhodamine-101, pyranine, HPTS or HPTS(Lys)3, MPTS, CTR, TSPP, TCPP, PTCA), Dyes (<0.5 wt%), triazine-stilbene, coumarins, imidazolines, diazoles, triazoles, benzoxazoles, and biphenyl stilbenes, individually or in combinations thereof.

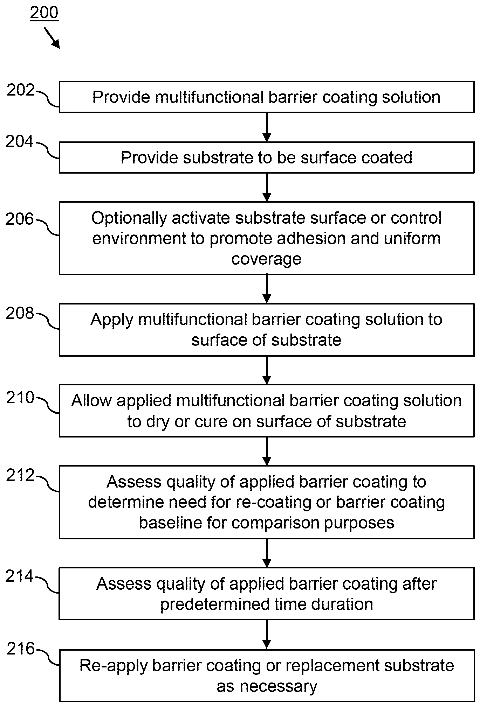

With reference to FIG. 2, a method for forming a barrier coating on a substrate surface is illustrated generally at 200. In a Step 202, a multifunctional barrier coating solution according to the above is provided. In a Step 204, a substrate having a surface to be surface coated is provided, for instance an aircraft interior component as described above. In an optional Step 206, the surface of the substrate may be pre-treated or otherwise activated to promote adhesion of the barrier coating to be formed on the surface. For example, activation treatments may include, but are not limited to, the application of heat, vacuum, primer, plasma, corona, UV/ozone, and chemical, individually or in combination, to promote uniform surface coating with enhanced adhesion/binding between the substrate and the formed coating. Substrate preparation, prior to coating application, may include one or more of cleaning, etching, heating, etc. In embodiments, the activation may improve the durability of the formed barrier coating. Activation techniques may be implemented prior to, during, or subsequent to barrier coating solution application, for instance under controlled conditions.

In a Step 208, the barrier coating forming solution is applied to the surface of the substrate. Application techniques may include electrostatic spray application, dipping, wiping, brushing, spraying or other application method, individually or in combination. In a Step 210, the applied barrier coating forming solution is allowed to dry or cure on the surface of the substrate, under ambient or controlled conditions. In some embodiments, the solution may be allowed to stand on the surface of the substrate for a predetermined time duration, for example, about 30 minutes to about 6 hours to form the barrier coating. Excess (e.g., unbonded) barrier coating solution may be removed in one or more optional rinsing steps and the coated substrate may be dried in one or more optional drying steps. Additional/optional steps may include applying at least one second surface coat atop the applied first or previous coat and allowing the at least one additional coat to dry or cure. In some embodiments, formed surface coating films have a thickness ranging from less than 1 mm to greater than several micrometers, depending on application.

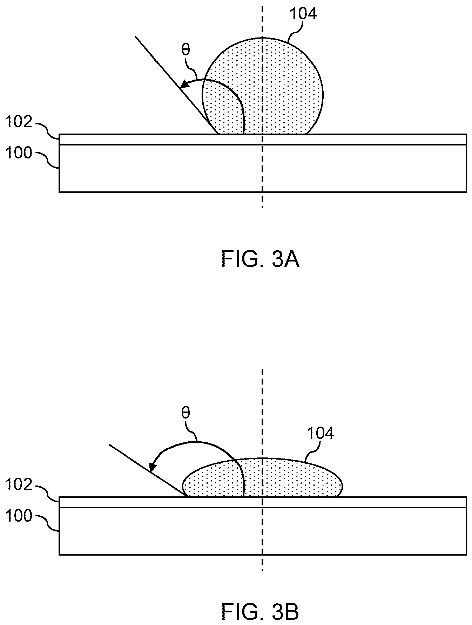

In a Step 212, after the barrier coating is formed, an initial assessment of the barrier coating is performed by subjecting the substrate under test to a quantifiable measurement technique. The initial assessment of the formed barrier coating may serve to determine the quality of the initially formed barrier coating, and assuming a quality/satisfactory initial coating, may serve as a baseline against which future barrier coating assessments of the substrate are compared. With reference to FIGS. 3A and 3B, in some embodiments, the quantifiable measurement technique may include performing a measurement of a liquid to solid angle of contact. The contact angle of a liquid, for instance a droplet of water 104, applied atop the freshly formed barrier coating 102 provides quantifiable information associated with the interaction between the applied fluid and the coated surface. More particularly, the applied liquid will wet the surface to a degree depending on the properties of the surface, and a formed barrier coating should provide a different contact angle as compared to a surface lacking a barrier coating.

With specific reference to FIG. 3A, the initially formed barrier coating 102 formed atop the surface 100 provides a measurable contact angle θ between the droplet 104 and the substantially planar (e.g., horizontal) formed barrier coating 102. The contact angle θ shown in FIG. 3A can provide the initial or reference contact angle of the formed coating, for example, indicative of a 100% barrier coating or thereabouts, which serves as a baseline in an algorithm against which future coating assessments can be compared. With reference to FIG. 3B, the measurable contact angle θ between the droplet 104 and the barrier coating 102, measured at a predetermined time period after initial barrier coating application, for instance after a predetermined 'in use' time duration, indicates the present state or integrity of the formed barrier coating 102. For example, comparing FIGS. 3A and 3B, which may be exaggerated for purposes of illustration, it is apparent that after a predetermined time duration the integrity of the barrier coating degrades, as evidenced by the angular change in θ, which shows a greater spread of the droplet and wetting of the surface indicating a decrease in the performance of the barrier coating 102, at least in terms of the ability of the barrier coating to repel fluids. In other words, in FIG. 3A the droplet 104 maintains its spherical shape to a greater degree as compared to the droplet shape shown in FIG. 3B in which the droplet spreads across the surface, indicating a greater degree of water repellency in the initially formed barrier coating as compared to the barrier carrier after a predetermined time (e.g., use) duration.

In some embodiments, the initial or refence contact angle measurement can serve as the 100% measurement indicative of a 'new' barrier coating. In a Step 214, additional contact angle measurements can be taken at one or more predetermined time durations after initial formation, for example after hours, days, weeks, months or years following in use service, and the algorithm can be used to determine a percentage difference corresponding to barrier coating degradation. In a Step 216, the amount of measured degradation can be used to determine the need for barrier coating re-application or component replacement. For example, different measured contact angles may correspond, for example, 75% barrier coating integrity, 50% barrier coating integrity, or 25% barrier coating integrity, or other, and the percentage can be used to determine the need for re-application or replacement. The algorithm can include different contact angle measurements corresponding to percentages of barrier coating integrity or life-remaining, which can be used to monitor the status of the barrier coating indicative of barrier coating performance. While the contact angle measurement may be an indicator of hydrophobicity performance of the barrier coating, the same can be used to determine the general state of the barrier coating, and consequently the performance state of the other functionalities of the multifunctional barrier coating.

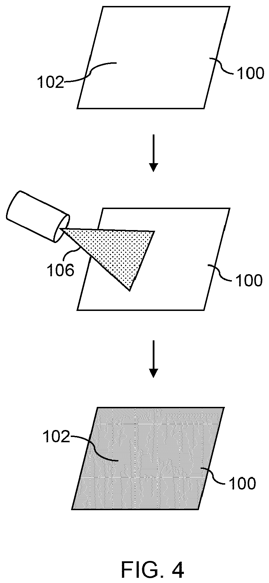

With reference to FIG. 4, the measurement step may include subjecting the substrate to a predetermined process configured to effect a change in the formed barrier coating. For example, with formed barrier coatings including a fluorescence capable dye component as discussed above, UV light may be directed to the substrate and the measurement technique may include comparing an intensity or amount of fluorescence compared to a predetermined threshold value and/or compared to an initial or refence fluorescence measurement. In some embodiments, intensity level data for a particular substrate may be saved for comparison against future data to track wear and/or coating performance. In some embodiments, the methods disclosed herein can be used to determine the level of coating wear between areas of a substrate by comparing the level of intensity between different predetermined areas. For example, obtained data can be used to determine frequent touchpoints that may require more frequent recoating, more robust coating, and/or additional coating layers. In an optional step, the substrate under test may be flagged for further action, for instance reapplication, servicing or replacement of the associated substrate, element or component. Methods according to the present disclosure can be used to verify the presence or absence of the applied barrier coating, for example, to verify the application and quality of the barrier coating during manufacturing and/or detect wear in the barrier coating during service.

FIG. 4 shows schematically the substrate 100 under test having a detectable fluorescent dye as a component of the formed barrier coating 102, application of the predetermined radiation 106 to be absorbed by the fluorescent dye, and emission of light in the visible spectrum indicated by the appearance difference between the top and bottom figures indicating fluorescence and therefore the presence of the barrier coating 102. Wear may be quantifiable as a reduction in luminosity of the fluorescent indicators under a wavelength of light. As luminosity of the fluorescent indicators may be reduced over time, the efficacy of the coating may be negatively correlated to a wear associated with the surface and a time since the barrier coating was applied. Thus, both the efficacy of the coating and the luminosity of the fluorescent indicator are negatively correlated to a wear and a time (e.g., as the fluorescent indicator is worn from the surface, the coating may be similarly worn). A correlation between the efficacy and the luminosity may thus be determined by a model.

In some embodiments, a system may include a light source for producing the UV radiation 106. The light source may be configured to emit radiation in a wavelength, for example, from 300 to 400 nm. For example, the system may include a blacklight. Light generated by the light source may be directed to the surface. The radiation from the light source may interact with the fluorescent indicator in the barrier coating thereby causing the fluorescent indicator to emit light (e.g., visible light in the 400 to 700 nm wavelength range). In some embodiments, the system may be configured to generate an image of the emitted light from the fluorescent indicator. The image of the emitted light from the fluorescent indicator may be generated by a detector, and such detection may occur by analog or digital means. For example, the detector may include, but is not limited to, an ultra-violet (UV) detector, a charge couple device (CCD) detector, a time delay and integration (TDI) detector, a photomultiplier tube (PMT), an avalanche photodiode (APD), a complementary metal-oxide-semiconductor (CMOS) sensor, or the like. The image may have an associated brightness or intensity (e.g., in lumens). The image may also include a color standard. The image may also be a greyscale image.

The system may further include a controller including a memory and a processor, wherein the controller is communicatively coupled with the detector. In this regard, the image generated by the detector may be provided to the controller of the system and stored in the memory. The controller may also process the image to determine an intensity profile. The memory may also include a model for estimating a barrier coating efficacy based on the received images. The model may correlate various data associated with the image (e.g., a luminosity, a brightness, a color standard, etc.) with an efficacy of a barrier coating. In some embodiments, the model may estimate the efficacy for the barrier coating based on the received image, and based on the estimated efficacy, the system may ensure all surfaces are treated with a sufficient coating. If an insufficient efficacy is estimated, the system may provide a notification to apply an additional coating. The system may be handheld for in field use and may include a power source for powering various components of the system, such as, but not limited to, the controller, detector and the light source. The system may also be configured to image the surface under ambient lighting conditions or under conditions with no ambient lighting.

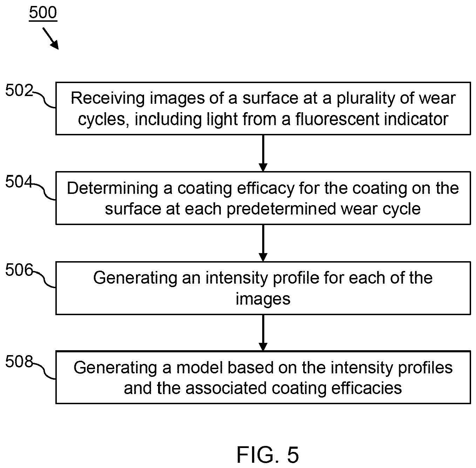

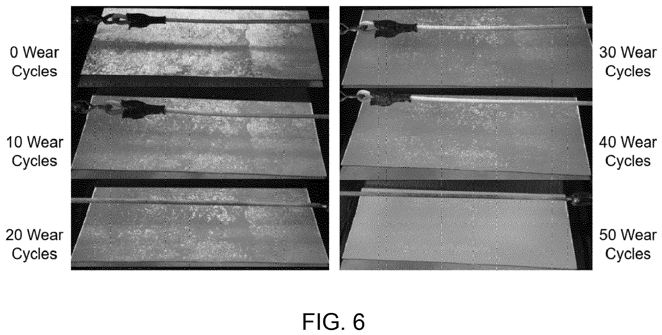

FIG. 5 shows a method 500 including in a Step 502 receiving images of a surface at a plurality of wear cycles, for example as shown in FIG. 6, the images including light from a fluorescent indicator. Sample images may be taken at various wear amounts, such as, but not limited to, from 0 wear cycles to 50 wear cycles. In this regard, sample images may be taken at any number of wear cycles and/or at various times after applying the barrier coating (e.g., a week, two weeks, a month, etc.). The method may further include in a Step 504, determining a coating efficacy for the coating on the surface at each of the wear cycles, wherein the coating efficacy may be determined by one or more of liquid chromatography or mass spectrometry. The method may further include in a third Step 506, generating an intensity profile for each of the images. The method may further include in a Step 508, generating a model based on the intensity profiles and the associated coating efficacies, and the model may correlate the intensity profiles and the measured coating efficacies.

In some embodiments, the barrier coating forming solution may be implemented as a wipe kit. In some embodiments, the kit may include an outer container for holding a plurality of wipes each saturated with a predetermined amount of barrier coating forming solution as described above. In some embodiments, the plurality of wipes may be individually packaged. In other embodiments, the plurality of wipes may be stacked and the outer container filled with a predetermined amount of barrier coating forming solution. In use, an individual wipe is removed from the container and/or its individual packaging, and wiped on the surface of the substrate to transfer the barrier coating forming solution from the wipe to the substrate.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

## Claims

1. A barrier coating forming solution (102), comprising:
a base coating component in an amount from 5 to 40% by weight of the barrier coating forming solution;
a solvent in an amount from 50 to 70% by weight of the barrier coating forming solution;
a flame, smoke and toxicity (FST) resistive component in an amount from 0.1 to 5% by weight of the barrier coating forming solution;
an ultraviolet (UV) resistive component in an amount from 0.1 to 2% by weight of the barrier coating forming solution;
an antimicrobial component in an amount from 0.1 to 5% by weight of the barrier coating forming solution; and
optionally, a dye component in an amount less than 0.5% by weight of the barrier coating forming solution.

2. The barrier coating forming solution (102) according to claim 1, wherein the base coating component comprises at least one of a siloxane, a silazane, a fluoro-substituted siloxane or silazane, polymethylsisequioxane, and polydimethylsiloxane.

3. The barrier coating forming solution (102) according to claim 1 or 2, wherein the solvent comprises at least one of an alcohol, water, and an acetate.

4. The barrier coating forming solution (102) according to any preceding claim, wherein the FST resistive component comprises at least one of clays having a particle diameter size from 1 to 25 microns, graphene, graphite, carbon nanotubes, aluminum trihydrate, an organophosphate, magnesium hydroxide, an antimony oxide, a molybdenum compound, a boron compound, a halogenated compound, melamine, and zinc.

5. The barrier coating forming solution (102) according to any preceding claim, wherein the UV resistive component comprises at least one of titanium dioxide, zinc oxide, a UV stabilizer, a hindered amine light stabilizer (HALS), and graphene.

6. The barrier coating forming solution (102) according to any preceding claim, wherein the antimicrobial component comprises at least one of copper, zinc pyrothione, silver, silver oxide, graphene, a quaternary ammonium compound, a silane quaternary ammonium compound, and triclosan.

7. The barrier coating forming solution (102) according to any preceding claim, wherein the dye component comprises a fluorescent indicator capable of absorption in the UV spectrum and emission in the visible spectrum.

8. The barrier coating forming solution (102) according to claim 7, wherein the dye component comprises at least one of 5-[[4-[bis(2-hydroxyethyl)amino]-6-(4-sulfonatoanilino)-1,3,5-triazin-2-yl]amino]-2-[(E)-2-[4-[[4-[bis(2-hydroxyethyl)amino]-6-(4-sulfonatoanilino)-1,3,5-triazin-2-yl]amino]-2-sulfonatophenyl]ethenyl]benzenesulfonate, tetrasodium 4,4'-bis[[4-[bis(2-hydroxyethyl)amino]-6-(4-sulphonatoanilino)-1,3,5-triazin-2-yl]amino]stilbene-2,2'-disulphonate], disodium;5-[[4-anilino-6-[2-hydroxyethyl(methyl)amino]-1,3,5-triazin-2-yl]amino]-2-[2-[4-[[4-anilino-6-[2-hydroxyethyl(methyl)amino]-1,3,5-triazin-2-yl]amino]-2-sulfonatophenyl]ethenyl]benzenesulfonate, disodium 4,4'-bis(4-anilino-6-morpholino-s-triazin-2-ylamino)-2,2'-stilbenedisulfonate, disodium;5-[[4-(2-methylanilino)-6-morpholin-4-yl-1,3,5-triazin-2-yl]amino]-2-[2-[4-[[4-(2-methylanilino)-6-morpholin-4-yl-1,3,5-triazin-2-yl]amino]-2-sulfonatophenyl]ethenyl]benzenesulfonate, hexasodium;2-[[4-[(3-amino-3-oxopropyl)-(2-hydroxyethyl)amino]-6-[4-[2-[4-[[4-[(3-amino-3-oxopropyl)-(2-hydroxyethyl)amino]-6-(2,5-disulfonatoanilino)-1,3,5-triazin-2-yl]amino]-2-sulfonatophenyl]ethenyl]-3-sulfonatoanilino]-1,3,5-triazin-2-yl]amino]benzene-1,4-disulfonate, fluorescein-SA, Lucifer yellow, sulforhodamine-B or sulforhodamine-101, pyranine, triazine-stilbene, coumarins, imidazolines, diazoles, triazoles, benzoxazoles, and biphenyl stilbenes.

9. The barrier coating forming solution (102) according to any preceding claim, further comprising:
the base coating component in an amount from 25 to 35 % by weight of the barrier coating forming solution;
the FST resistive component in an amount from 0.5 to 3.5% by weight of the barrier coating forming solution; and
the antimicrobial component in an amount from 0.5 to 2% by weight of the barrier coating forming solution.

10. A method for applying a barrier coating to a surface of a substrate (100) and detecting the applied barrier coating, the method comprising the steps of:
providing a barrier coating forming solution comprising:
a base coating component in an amount from 5 to 40% by weight of the barrier coating forming solution;
a solvent in an amount from 50 to 70% by weight of the barrier coating forming solution;
a flame, smoke and toxicity (FST) resistive component in an amount from 0.1 to 5% by weight of the barrier coating forming solution;
an ultraviolet (UV) resistive component in an amount from 0.1 to 2% by weight of the barrier coating forming solution; and
an antimicrobial component in an amount from 0.1 to 5% by weight of the barrier coating forming solution;
providing a substrate;
applying the barrier coating forming solution to a surface of the substrate;
allowing the applied barrier coating forming solution to cure or dry to form a barrier coating on the surface of the substrate; and
detecting the formed barrier coating via a quantifiable measurement technique.

11. The method according to claim 10, wherein the quantifiable measurement technique comprises applying a droplet atop the surface of the substrate and determining a contact angle between the applied droplet and the surface of the substrate.

12. The method according to claim 11, wherein the method further comprises the sequentially performed steps of:
applying a first droplet atop the surface of the substrate at a time of formation of the formed barrier coating and determining a first contact angle between the applied first droplet and the surface of the substrate;
applying a second droplet atop the surface of the substrate after a predetermined period of use of the substrate to determine a second contact angle between the applied second droplet and the surface of the substrate; and
upon exceeding a predetermined difference between the second contact angle and the first contact angle, reapplying the barrier coating forming solution to the surface of the substrate and allowing the reapplied barrier coating forming solution to cure or dry to form a barrier coating on the surface of the substrate.

13. The method according to claim 10, 11 or 12, wherein:
the barrier coating forming solution further comprises a dye component in an amount less than 0.5% by weight of the barrier coating forming solution; and
the quantifiable measurement technique comprises applying UV light to the surface of the substrate and measuring fluorescence of the formed barrier coating.

14. The method according to claim 13, wherein the method further comprises the sequentially performed steps of:
applying UV light to the surface of the substrate at a time of formation of the formed barrier coating and determining a first observed fluorescence at the surface of the substrate;
applying UV light to the surface of the substrate after a predetermined period of use of the substrate to determine a second observed fluorescence at the surface of the substrate; and
upon exceeding a predetermined difference between the second observed fluorescence and the first observed fluorescence, reapplying the barrier coating forming solution to the surface of the substrate and allowing the reapplied barrier coating forming solution to cure or dry to form a barrier coating on the surface of the substrate.

15. The method according to any of claims 10-14, wherein the barrier coating forming solution is provided as a wet wipe containing the barrier coating forming solution and the step of applying the barrier coating forming solution to the surface of the substrate comprises wiping the wet wipe along the surface of the substrate to transfer the barrier coating forming solution from the wet wipe to the surface of the substrate.
